# EUROPÄISCHE PATENTSCHRIFT

(11) **EP 1 329 405 B1**
(45) Veröffentlichungstag und Bekanntmachung des Hinweises auf die Patenterteilung: **06.09.2006**
(21) Anmeldenummer: 02025437.1
(22) Anmeldetag: 15.11.2002
(51) Int. Cl.: B65H 35/00, B26D 7/01, B29D 30/46

(54) **Vorrichtung zum Schneiden von Bandmaterial mit Schneidwinkelverstelllung**
Device for cutting web material with adjustable cutting angle
Dispositif pour la découpe de matériau en bande avec un angle de coupe reglable

(30) Priorität: 16.01.2002 DE 10201368
(43) Veröffentlichungstag der Anmeldung: 23.07.2003
(73) Patentinhaber: Karl Eugen Fischer GmbH Maschinenfabrik, D-96224 Burgkunstadt (DE)
(72) Erfinder: Hoffmann, Bernd, 96224 Burgkunstadt (DE)
(74) Vertreter: Blaumeier, Jörg

(56) Entgegenhaltungen:
- EP-A- 0 958 913
- DE-B- 1 260 131
- PATENT ABSTRACTS OF JAPAN vol. 014, no. 527 (M-1050), 20. November 1990 (1990-11-20) -& JP 02 223432 A (YOKOHAMA RUBBER CO LTD:THE), 5. September 1990 (1990-09-05)

## Beschreibung

Die Erfindung bezieht sich auf eine Vorrichtung zum Schneiden von Bandmaterial, insbesondere Cordbändern, umfassend eine Schere mit einem beweglichen Obermesser und einem ortsfesten Untermesser, ein Abtransportband sowie einen vorgelagerten verschwenkbaren Ablagetisch, und eine Einzugsvorrichtung für das Bandmaterial.

Beim Schneiden von Bandmaterial, insbesondere gilt dies für das Schneiden von unvulkanisierten Cordbändern in der Reifenindustrie, ergibt sich immer wieder das Problem eines Verziehens des Bandes und damit des Anfalls großer Mengen an Ausschussmaterial. Speziell beim Ändern des Schneidwinkels besteht immer die Gefahr, dass der durchgezogene Bandabschnitt, der auf dem Abtransportband aufliegt, beim Verschwenken des Auflagetisches verschoben und gefältelt wird, sodass kein glatter Schnitt entsteht und somit immer wieder neue Abschnitte als Abfall entsorgt werden können, ehe endlich der richtige Schneidwinkel eingestellt ist.

Aus EP 0 958 913 A1 ist eine Vorrichtung zum Ausrichten und Verspleißen eines Bandmaterials bekannt. Diese Spleißvorrichtung umfasst ein Förderband, mit dem einzelne, zuvor geschnittene Bandabschnitte zugeführt und aneinander angelegt werden können. Über eine Spleißeinrichtung werden die beiden Bandabschnitte im Überlappbereich miteinander zur Bildung eines langen Bandes verspleißt.

Aus JP(A) 02223432 ist eine Schneidvorrichtung bekannt, bei welcher verschiedene separat betriebene Ansaugvorrichtungen vorgesehen sind, um das Bandmaterial, das in einem sich ändernden Winkel geschnitten werden soll, an unterschiedlichen Stellen zu verschiedenen Zeitpunkten lokal zu fixieren.

Schließlich ist aus DE-B-1 260 131 eine Einrichtung zum Zuführen einer Bahn aus Gummi zu einer Schneidmaschine bekannt, mit einer sich über die Breite der Bahn erstreckenden magnetischen Klemmbacke und einer weiteren durch die magnetische Klemmbacke beeinflussbaren Klemmbacke, die unter der erstgenannten Klemmbacke angeordnet ist und in Form eines dünnwandigen, biegsamen, jedoch quersteifen Streifens ausgeführt ist, dessen Enden über Zugfedern mit der magnetischen Klemmbacke verbunden sind. Die obere magnetische Klemmbacke besitzt heb- und senkbare Permanentmagneten, die mit den Stahlfäden des Bandes zusammenwirken und dieses im Zusammenwirken mit der zweiten Klemmbacke verklemmen, so dass es gefördert werden kann.

Der Erfindung liegt daher die Aufgabe zugrunde, eine Schneidvorrichtung der eingangs genannten Art so auszugestalten, dass Bandverformungen, insbesondere beim Verschwenken des Auflagetisches, vermieden und damit durch der entstehende Ausschuss reduziert wird.

Zur Lösung dieser Aufgabe ist erfindungsgemäß vorgesehen, dass auf dem Ablagetisch zwischen dem Ablagetisch und dem Bandmaterial ein Verschiebeblech in Bandförderrichtung verschiebbar gelagert ist, das gemeinsam mit dem Letoff verschwenkbar ist, und das über den Ablagetisch hinaus oberhalb des Abtransportbands verschiebbar ist, wobei das Verschiebeblech das Bandmaterial nach Freigabe des Bandmaterials durch die Einzugsvorrichtung während des Verschwenkens abstütz.

Durch das erfindungsgemäße Verschiebeblech wird das Bandmaterial nach der Freigabe durch die Einzugsvorrichtung nicht einfach auf dem Abtransportband abgelegt, sodass überhaupt keine Verformung des Bandendes und damit die Gefahr des Auftretens von Ausschussmaterial, eintreten kann. Erst nach einer erfolgten Schneidwinkelverstellung fährt das Verschiebeblech wieder in seine Ausgangsstellung zurück und legt dann das Bandmaterial, das anschließend nicht mehr bewegt wird und sich demzufolge auch nicht verformen kann, auf dem Abtransportband ab.

Um diese Abstützfunktion optimal zu gewährleisten kann - bei entsprechend steifem Verschiebeblech und genügend Freiraum nach hinten - vorgesehen sein, dass das Verschiebeblech das Bandmaterial in der ausgeschobenen Endstellung etwas überragt.

Um möglichst das gesamte vorlaufende Ende des Bandmaterials abstützen zu können, kann das Verschiebeblech eine abgeschrägte Vorderkante aufweisen.

In weiterer Ausgestaltung der Erfindung kann dabei vorgesehen sein, dass das Verschiebeblech wellenförmig abgekantet ist, wobei die Auflagekanten der Wellenberge parallel zur Verschieberichtung verlaufen. Durch diese Ausbildung ergibt sich nicht nur eine verringerte Auflagefläche, die das Zurückziehen des Verschiebeblechs vor dem Schneiden des Bandmaterials ohne Mitnehmen und Verformen des Bandmaterials erleichtert, sondern es bietet sich dadurch auch die Möglichkeit, diese Zurückziehwirkung durch Einblasen von Luft zwischen Bandmaterial und Verschiebeblech noch weiter zu erleichtern. Zu diesem Zweck kann eine am hinteren Ende des Verschiebeblechs befestigte Blasleiste zum Einblasen von Luft vorgesehen sein, wobei die Luft in den relativ flachen Tälern des wellenförmigen Verschiebeblechs eingeblasen werden kann. Die Aktivierung dieser Blasleiste erfolgt also immer erst dann, wenn das Verschiebeblech, nachdem es das Bandmaterial abgestützt durch die Schere geführt hat, wieder in seine Ausgangsstellung zurückgefahren werden soll.

Mit besonderem Vorteil kann weiter vorgesehen sein, dass ein zum Festklemmen des Bandmaterials beim Schneiden vorhandener Niederhalter der Schere mit einer Magnet- und/oder Saugleiste zum Anheben des Bandmaterials beim Zurückfahren des Verschiebeblechs versehen ist. Diese Halterung des Bandmaterials unmittelbar neben der späteren Schnittstelle ist für das Zurückfahren des Verschiebeblechs ohne die Gefahr eines Verziehens des vorher darauf aufgelagerten Materialbandes von ganz besonderer Bedeutung.

Durch die erfindungsgemäße Vorrichtung ist eine automatische Schneidwinkelverstellung ohne Verzug am Material, also somit mit erheblich weniger Verschnitt, möglich, da der erste Schnitt nach erfolgter Schneidwinkelverstellung bereits maßlich in Ordnung ist, sodass nicht wie bisher erst einige Streifen weggeworfen werden müssen, durch den beim Schneidwinkelverstellen auftretenden Verzug im Material. Der Verschnitt wird automatisch abgeschnitten und im Schrottbehälter gesammelt. Bisher musste der Bediener nach erfolgter Schneidwinkelverstellung den Verschnitt im manuellen Betrieb der Maschine in die Schere transportieren, abschneiden, aus der Schere heraustransportieren und manuell vom Transportband entnehmen.

Durch den Wegfall der manuellen Bedienschritte des Bedieners beim herkömmlichen Winkelverstellen, nämlich dem Einfahren des Verschnitts in die Schere nach erfolgter Winkelverstellung im Handbetrieb der Maschine, dem Abschneiden des Verschnitts im Handbetrieb der Maschine, dem Ausfahren des Verschnitts im Handbetrieb, der Entnahme des Verschnitts manuell vom Band und der Kontrolle der ersten ca. 5 bis 10 Streifen nach erfolgter Winkelverstellung auf Maßhaltigkeit und gegebenenfalls dem manuellen Entnehmen vom Band, wenn die Maßhaltigkeit nicht gegeben ist, wird eine erhebliche Zeitersparnis erreicht. Durch diese Zeitersparnis kann die Maschine wesentlich flexibler in der Produktion eingesetzt werden (Verringerung der Rüstzeit). Dadurch ist sowohl ein Produktwechsel leichter möglich als auch das Verarbeiten kleinerer Losgrößen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Aufsicht auf eine erfindungsgemäße Schneidvorrichtung,
- Fig. 2: eine Seitenansicht der Schneidvorrichtung nach Fig. 1,
- Fig. 3: eine vergrößerte Detailansicht des Einzugsbereichs III der Schneidvorrichtung in Fig. 2,
- Fig. 4: eine der Fig. 3 entsprechende Seitenansicht während des Einziehens des Bandmaterials unterstützt durch das ebenfalls nach vorne verschobene Verschiebeblech,
- Fig. 5: eine Aufsicht auf die Schneidvorrichtung in der Betriebsstellung nach Fig. 4,
- Fig. 6: eine den Figuren 3 und 4 entsprechende Seitenansicht nach dem vollständigen Einziehen des Bandmaterials und der Freigabe durch die Einzugsvorrichtung,
- Fig. 7: eine Aufsicht auf die Schneidvorrichtung in der Betriebsstellung nach Fig. 6,
- Fig. 8: eine der Fig. 7 entsprechende Draufsicht nach Verstellung des Schneidwinkels auf einen spitzeren Winkel,
- Fig. 9: eine Seitenansicht des Schneidbereichs der Schneidvorrichtung mit ausgefahrener Magnet- oder Blasleiste des Niederhalters zum Anheben des Bandmaterials während des Zurückziehens des Verschiebeblechs,
- Fig. 10: eine Seitenansicht entsprechend Fig. 9 in der vollständig zurückgezogenen Stellung des Verschiebeblechs,
- Fig. 11: eine den Fig. 9 und 10 entsprechende Seitenansicht bei abgefahrenem Niederhalter vor dem Schnitt,
- Fig. 12: die Seitenansicht der Schneidvorrichtung nach dem Schnitt,
- Fig. 13: eine Seitenansicht der Schneidvorrichtung nach Abtransport des abgeschnittenen Bandabschnitts und Hochfahren des Niederhalters,
- Fig. 14: einen vergrößerten Schnitt längs der Linie XIV - XIV in Fig. 1 und
- Fig. 15: einen vergrößerten Schnitt längs der Linie XV - XV in Fig. 1.

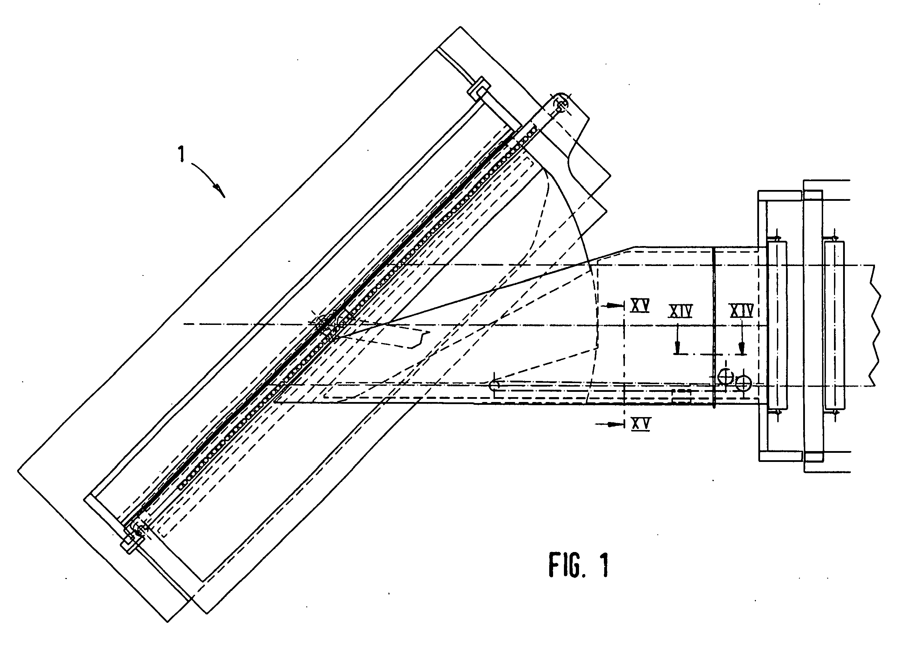

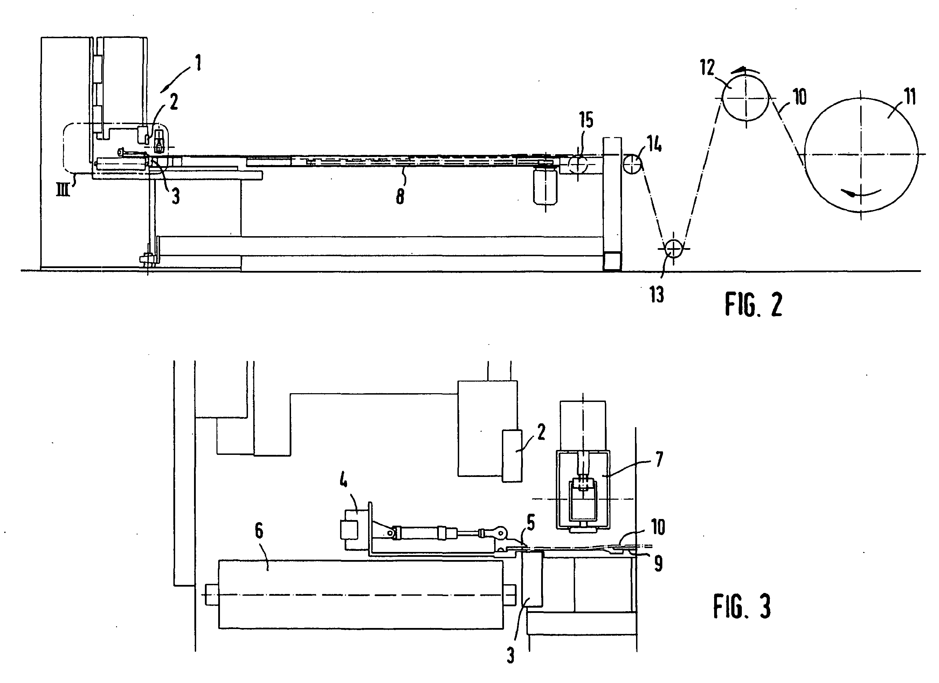

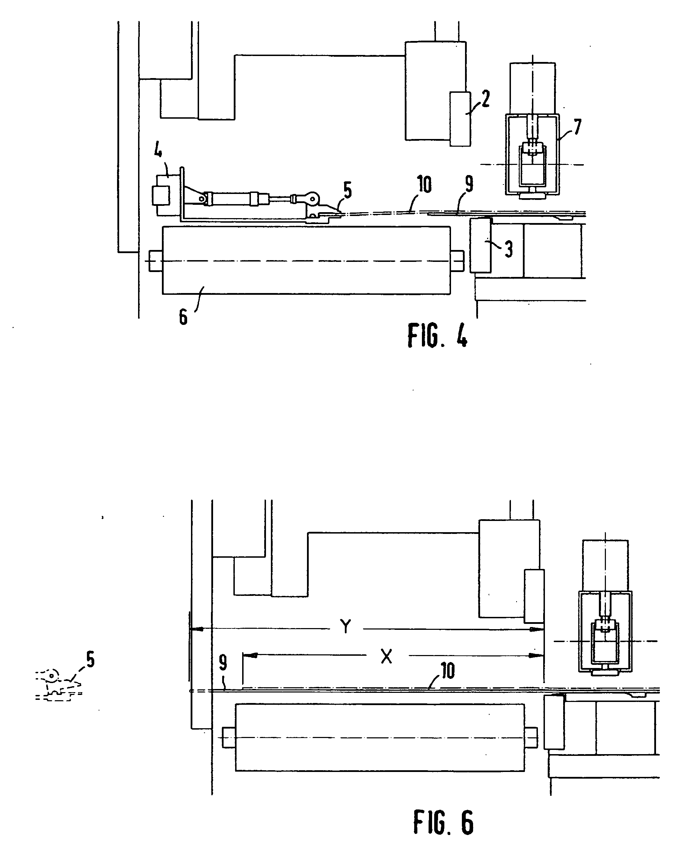

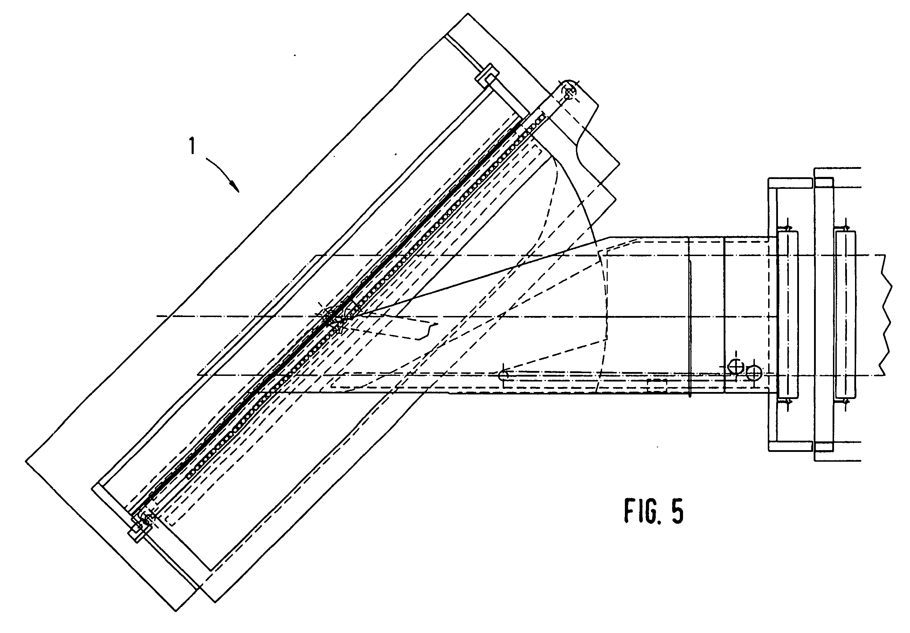

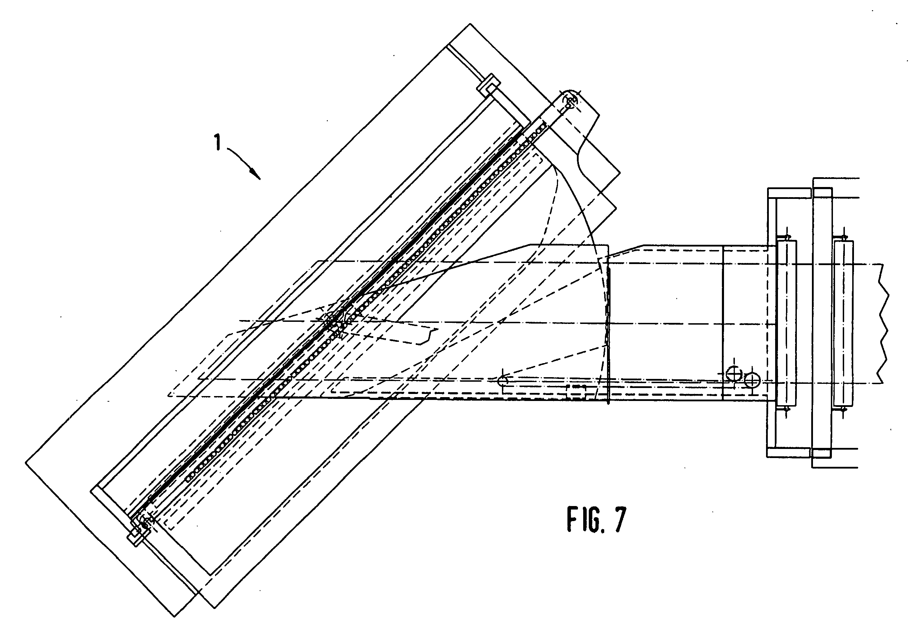

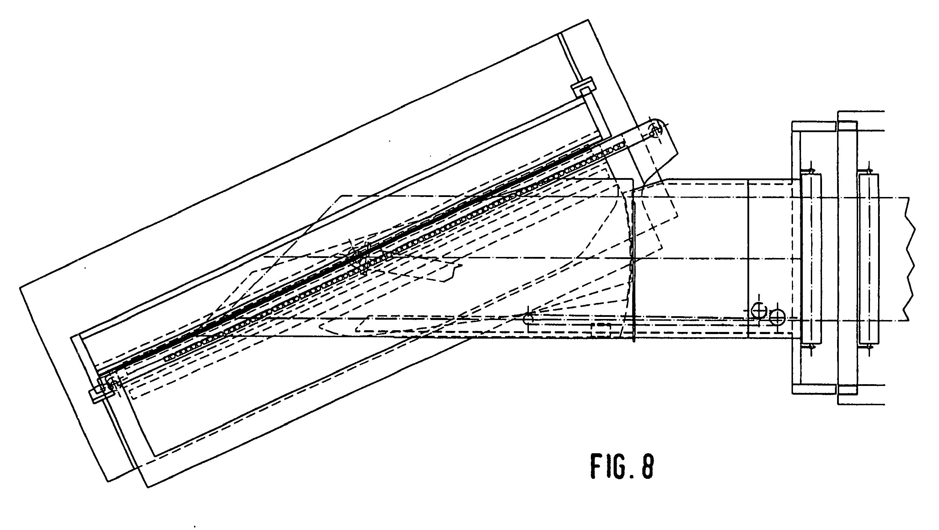

In den Fig. 1 bis 3 erkennt man die Schere 1 mit dem beweglichen Obermesser 2 und dem ortsfesten Untermesser 3, dem Rückzug 4 für die Rückzugzange 5 zum Durchziehen des Bandmaterials durch die Schere, das Abtransportband 6 zum Abtransport der abgeschnittenen Bandabschnitte und den Niederhalter 7. Vor der Schere ist ein Ablagetisch 8 angeordnet, auf dem ein Verschiebeblech 9 zwischen dem Bandmaterial 10 und dem Tisch in Bandförderrichtung verschiebbar gelagert ist. Vom Letoff 11 wird das Bandmaterial 10 über eine Umlenkwalze 12, eine Tänzerwalze 13 und weitere Walzen 14, 15 angeliefert. Zum Durchziehen des Bandmaterials 10 durch die Schere wird in der Ausgangsposition nach dem Abschneiden eines vorherigen Bandabschnitts die Rückzugzange an das vordere Bandende angesetzt und das Band - ebenfalls bei dem in den Fig. 1 bis 3 dargestellten Ausführungsbeispiel zunächst um etwa 200 mm eingezogen. Anschließend - prinzipiell wäre auch von vorneherein ein synchrones Verschieben möglich - erfolgt ein im Wesentlichen synchrones Verschieben des Verschiebeblechs 9 gemeinsam mit dem Durchziehen des Bandmaterials 10, sodass über die Zwischenstellung nach Fig. 4 und 5 schließlich die endgültige Durchschiebeposition erreicht ist, in der das Band soweit durchgezogen worden ist, dass ein gewünschter Bandabschnitt der Länge X (Fig. 6) abgeschnitten werden kann. Das Verschiebeblech ist dabei etwas weiter nach vorne vorgeschoben worden, insgesamt um das Maß Y gegenüber der Schnittebene, sodass das Bandmaterial 10 weitestgehend abgestützt ist. Zur Veränderung des Schneidwinkels aus der Position nach Fig. 7 in die neue Schneidwinkelposition gemäß Fig. 8 erfolgt ein gemeinsames Verschwenken von Letoff, Verschiebeblech und darauf auflagerndem Bandmaterial ohne jegliche Gefahr eines Verziehens während dieser Winkelverstellung.

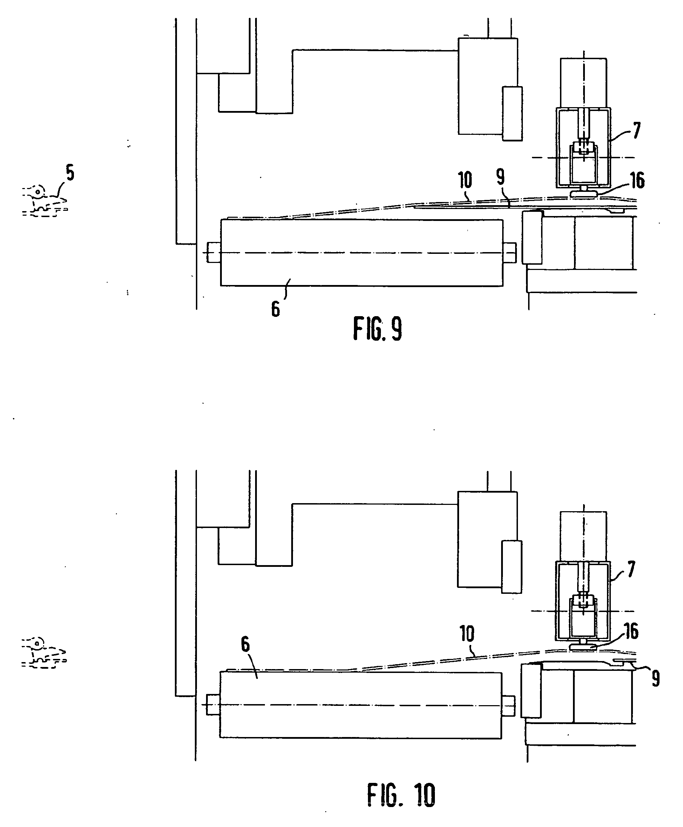

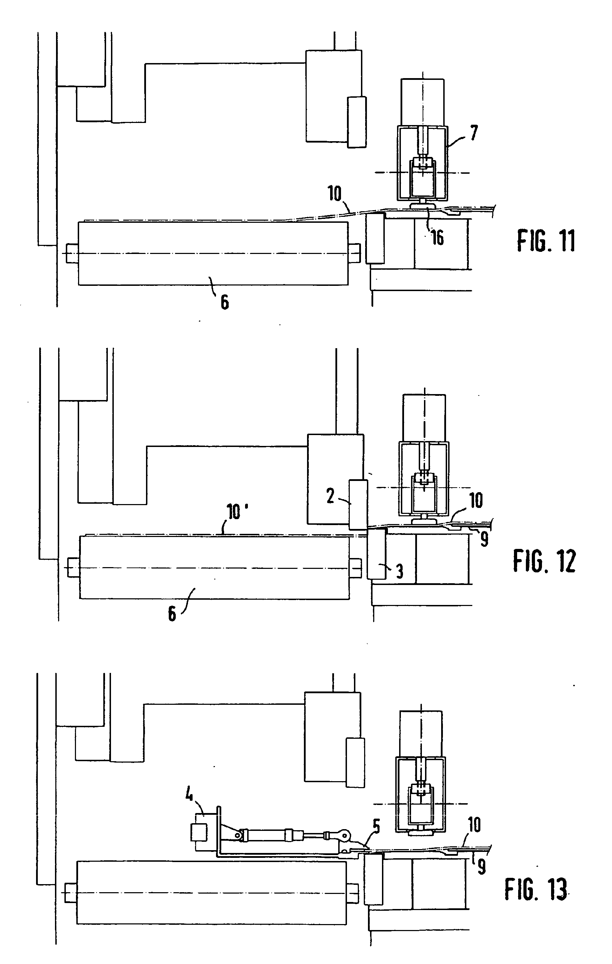

Anschließend wird, wie in Fig. 9 gezeigt ist, eine Magnet- oder Saugleiste des Niederhalters 7 ausgefahren, um das Bandmaterial entweder durch Ansaugen oder durch Magnetkraft (bei Stahlcordbändern) anzuheben, sodass es beim Zurückziehen des Verschiebeblechs nicht an diesem haftet und bei diesem Zurückziehen nicht verformt wird. Das Bandmaterial legt sich dabei, wie in den Fig. 9 und 10 zu erkennen ist, auf dem Abtransportband 6 der Schneidvorrichtung ab. Nach dem vollständigen Zurückziehen des Verschiebeblechs in die in Fig. 10 erkennbare Position fährt der Niederhalter 7 ab und drückt das Bandmaterial am Schneidtisch fest (Fig. 11) sodass es beim eigentlichen Schneiden (Fig. 12) fixiert ist und sich nicht verformen kann. Nach dem Abtransport des auf dem Abtransportband 6 abgelegten Bandabschnitts 10' wird wiederum der Rückzug betätigt um die Rückzugzange in die in Fig. 13 gezeigte Position zu bringen, in der der Niederhalter wieder nach oben gefahren ist und die Rückzugzange das vordere Ende des Bandmaterials 10 eingeklemmt hat, sodass anschließend das erneute Durchziehen des Bandmaterials entsprechend der Abfolge der Figuren 1 bis 12 erfolgen kann.

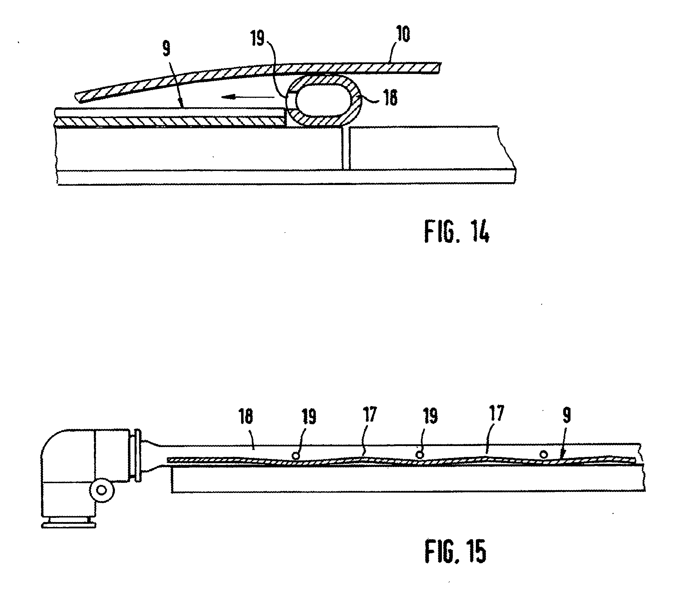

Das Verschiebeblech 9 ist, wie man insbesondere aus den Fig. 14 und 15 erkennen kann, wellenförmig abgekantet, wobei die Auflagekanten 17 der "Wellenberge" parallel zur Verschieberichtung verlaufen. Die Wellenberge haben einen Abstand von ca. 40 mm voneinander, wobei die Vertiefungen nur ca. 2 mm ausmachen. Dennoch ergibt sich durch diese Abkantung eine geringere Auflagefläche des aufliegenden Bandes und somit ein leichteres Zurückziehen des Verschiebeblechs ohne Verformung des Bandmaterials und insbesondere ergibt sich dabei die Möglichkeit, über eine am hinteren Ende des Verschiebeblechs 9 befestige Blasleiste 18 mit Luftlöchern 19, Luft zwischen das Bandmaterial 10 und das Verschiebeblech 9 einzublasen, sodass ein Anhaften durch das Anheben des Bandmaterials vermieden und damit ein sehr leichtes Zurückziehen des Verschiebeblechs gewährleistet ist.

## Patentansprüche

1. Vorrichtung zum Schneiden von Bandmaterial (10), insbesondere Cordbändern, umfassend eine Schere (1) mit einem beweglichen Obermesser (2) und einem ortsfesten Untermesser (3), ein Abtransportband (6) sowie einen vorgelagerten verschwenkbaren Ablagetisch (8), und eine Einzugsvorrichtung (4, 5) für das Bandmaterial (10), **dadurch gekennzeichnet, dass** auf dem Ablagetisch (8) zwischen dem Ablagetisch (8) und dem Bandmaterial (10) ein Verschiebeblech (9) in Bandförderrichtung verschiebbar gelagert ist, das gemeinsam mit einem Letoff (11) verschwenkbar ist, und das über den Ablagetisch (8) hinaus oberhalb des Abtransportbands (6) verschiebbar ist, wobei das Verschiebeblech (9) das Bandmaterial nach Freigabe des Bandmaterials (10) durch die Einzugsvorrichtung während der Verschwenkens abstützt.

2. Vorrichtung nach Anspruch 1, **dadurch gekennzeichnet, dass** das Verschiebeblech (9) das Bandmaterial (10) in der ausgeschobenen Endstellung etwas überragt.

3. Vorrichtung nach Anspruch 1 oder 2, **dadurch gekennzeichnet, dass** das Verschiebeblech (9) eine abgeschrägte Vorderkante aufweist.

4. Vorrichtung nach einem der Ansprüche 1 bis 3, **dadurch gekennzeichnet, dass** das Verschiebeblech (9) wellenförmig abgekantet ist, wobei die Auflagekanten der "Wellenberge" parallel zur Verschieberichtung verlaufen.

5. Vorrichtung nach einem der Ansprüche 1 bis 4, **gekennzeichnet durch** eine am hinteren Ende des Verschiebeblechs (9) befestigte Blasleiste (18) zum Einblasen von Luft zwischen dem Bandmaterial (10) und dem Verschiebeblech (9).

6. Vorrichtung nach einem der Ansprüche 1 bis 5, **dadurch gekennzeichnet, dass** ein Niederhalter (7) zum Festklemmen des Bandmaterials (10) beim Schneiden mit einer Magnet- und/oder Saugleiste zum Anheben des Bandmaterials (10) beim Zurückfahren des Verschiebeblechs (9) versehen ist.

## Claims

1. Device for cutting web material (10), in particular corded strips, comprising a shearing machine (1) having a movable upper blade (2) and a fixed lower blade (3), a delivery conveyor (6) and an upstream pivotable delivery table (8), and comprising an intake device (4, 5) for the web material (10), **characterised in that** on the delivery table (8), between the delivery table (8) and the web material (10), a displacement plate (9) is displaceably mounted in the web conveying direction, is pivotable together with the delivery table, and is displaceable beyond the delivery table (8) above the delivery conveyor (6), the displacement plate (9) supporting the web material after release of the web material (10) by the intake device during pivoting.

2. Device according to claim 1, **characterised in that** the displacement plate (9) slightly projects beyond the web material (10) in the extended final position.

3. Device according to claim 1 or 2, **characterised in that** the displacement plate (9) has a chamfered front edge.

4. Device according to one of claims 1 to 3, **characterised in that** the displacement plate (9) is chamfered in an undulating manner, so that the supporting edges of the "wave peaks" extend parallel to the displacement direction.

5. Device according to one of claims 1 to 4, **characterised by** a blowing strip (18) fixed to the rear end of the displacement plate (9) for blowing in air between the web material (10) and the displacement plate (9).

6. Device according to one of claims 1 to 5, **characterised in that** a holding-down device (7) is provided for clamping down the web material (10) during cutting, using a magnetic and/or suction strip for raising the web material (10) when the displacement plate (9) moves back.

## Revendications

1. Dispositif de coupe d'un matériau en bande (10), en particulier des bandes de câbles, comportant une cisaille (1) avec une lame de coupe supérieure (2) mobile et une lame de coupe inférieure (3) fixe, une bande d'évacuation (6), ainsi qu'une table de pose (8) pivotante, montée en aval de cette dernière, et un dispositif d'amenage (4, 5) pour le matériau en bande (10), **caractérisé en ce que** sur la table de pose (8), entre la table de pose (8) et le matériau en bande (10), est montée, de manière mobile dans la direction de transport de la bande, une plaque mobile (9)qui peut pivoter conjointement avec un dévidoir (11) et qui peut se déplacer au-delà de la table de pose (8) au-dessus de la bande d'évacuation (6), la plaque mobile (9) supportant le matériau en bande pendant le pivotement après que le dispositif d'amenage ait libéré le matériau en bande (10).

2. Dispositif selon la revendication 1, **caractérisé en ce que** la plaque mobile (9) dépasse quelque peu le matériau en bande (10) dans la position finale extraite.

3. Dispositif selon la revendication 1 ou 2, **caractérisé en ce que** la plaque mobile (9) comporte une arête avant chanfreinée.

4. Dispositif selon l'une quelconque des revendications 1 à 3, **caractérisé en ce que** la plaque mobile (9) est chanfreinée sous forme ondulée, les arêtes d'appui des « sommets d'ondes » étant parallèles au sens de déplacement.

5. dispositif selon l'une quelconque des revendications 1 à 4, **caractérisé par** un bandeau de soufflage (18), fixé sur l'extrémité arrière de la plaque mobile (9) et destiné à insuffler l'air entre le matériau en bande (10) et la plaque mobile (9).

6. Dispositif selon l'une quelconque des revendications 1 à 5, **caractérisé en ce qu'**un dispositif de serrage (7) destiné à bloquer le matériau en bande (10) pendant la coupe est muni d'une baguette aimantée et/ou d'aspiration destinée à soulever le matériau en bande (10) pendant le mouvement de retour de la plaque mobile (9).
